# EUROPEAN PATENT SPECIFICATION

(11) **EP 1 241 455 B1**
(45) Date of publication and mention of the grant of the patent: **10.08.2005**
(21) Application number: 02396029.7
(22) Date of filing: 12.03.2002
(51) Int. Cl.: G01G 19/02, G01D 5/39, G01G 19/00, G01G 19/414

(54) **Weight measuring method and system**
Gewichtmessverfahren und -vorrichtung
Système et appareil de mesure de poids

(30) Priority: 13.03.2001 FI 20010498
(43) Date of publication of application: 18.09.2002
(73) Proprietor: Tamtron OY, 33561 Tampere (FI)
(72) Inventor: Asikainen, Pentti Sauli, 35800 Mänttä (FI)
(74) Representative: Kupiainen, Juhani Kalervo

(56) References cited:
- EP-A- 0 384 797
- EP-A- 0 884 664
- WO-A-01/57477
- US-A- 5 233 520
- US-A- 5 412 420
- US-A- 5 559 894
- US-A- 5 870 140
- US-A- 5 870 220

## Description

The invention relates to a method and system for measuring a material. In particular, the invention relates to measuring, wherein the measuring result is linked with a measured material.

Selling, buying, transporting, handling of a material and other such actions are often accompanied by measuring the amount or another like property of the material and by effecting a compensation due on the basis thereof. However, nearly always the presence of all parties involved with a material to be measured is not possible in the measuring process, which may easily arouse suspicions regarding a material measurement carried out by just one of the parties. The party responsible for measurement may either intentionally or unintentionally alter a measuring result or otherwise inform the other parties incorrectly about the measuring result.

One solution to the above problems can be found in various legal precautions and solutions, wherein the measuring process and measuring result are documented on some type of printout, said document being signed by the party responsible for measuring. For example, the document can be printed automatically by means of a measuring apparatus, whereby the measurer cannot alter the measuring result.

Also some solutions to the above problems are discussed in prior art documents US 5,412,420 (D1), US 5,559,894 (D2), US 5,870,140 (D3), US 5,870,220 (D4), US 5,233,520 (D5) EP 0 384 797 (D6) and EP 0 884 664 (D7). D1 relates to a three-dimensional phenotypic measuring system for animals, where a three-dimensional image of the animal is created projecting several laser light beams and measuring their reflection. Also a weighing device is used to gather body weight of the animal as additional information and weight of the animal is sent to the computer system via wiring and stored with the conformation data. D2 and D3 disclose a method and device for inspecting devices, such as meters, particularly electric usage meters, and especially for detection of tampering, where the meters, or their readings, are inspected by visual computer-linked camera scanning.

Further D4 relates to a portable 3-D scanning system for rapid shape digitizing and adaptive mesh generation, and D5 to a method and system for measurement of intake of foods, nutrients and other food components, where weights of food, for example are recorded. Further D5 discloses an optional possibility to verify items weighted in and out through synchronized video images, and an optional possibility to transfer data via telephone lines for central collection and/or further processing. In addition D6 discloses a self-service weigh bridge, where a picture showing a vehicle to be measured, the vehicle weight and the date and time of weighing can be printed. Moreover D7 provides a remote control measuring system that allows a remote driving and controlling of the measuring apparatus corresponding to a measurement command to be performed without a limit of distance, such as from an operating room, and further to allow the measurement process to be performed in real time, wherein measured information, which includes measured data and error information, is immediately displayed, whereupon a new measurement command can be generated for driving and controlling the measuring apparatus, for example if an error has taken place.

However, a measurer will be able to tamper with the above-mentioned measuring result, for example by adding or removing some measured material into or from a measuring apparatus, whereby the measurer can obtain a result in his/her favour even if the measurement and the printing of a document associated therewith were effected automatically, or even if the material intended to be measured is imaged or photographed. In addition, due to his/her carelessness, a measurer may also measure a wrong batch of material, whereby the measuring result is not reliable. Further problems arise, when all parties involved with the measured material are not able to be present at the measuring process, whereupon their opinion to approve or deny the measuring is not known. Especially this is problematic in measuring process, where the measuring of the material to be measured and the approval or rejection of the measuring process, including results, should be performed quickly and so that all parties involved with the measured material were heard.

It is an object of the invention to create such a solution that the above drawbacks of prior art can be alleviated. The problem addressed by the invention is how to make sure that a measuring process and a measuring result obtained thereby are truly linked with each other, and how to communicate the measuring data based on a measuring process and result to parties involved with the measured material.

These objects of the invention are accomplished by imaging a material to be measured and a measuring process, as well as by effecting a measurement of the material to be measured, followed by conveying the image information and the measuring result in the form of electronic measuring data to the accessibility of parties involved in the process.

The present invention provides a method in accordance with claim 1.

Further the present invention provides an apparatus in accordance with claim 10.

A few preferred embodiments of the invention are disclosed in the dependent claims.

The inventive method provides a convenient, simple, and reliable way of measuring a material whenever the measurement is used as a basis for paying compensation for material, freight, handling or the like incident. The inventive method can be applied for example in occasions, wherein a measuring process cannot be attended by all parties involved with the measuring process, whereby the invention can be used to demonstrate undeniably that a proper material has been measured in a measuring process and a measuring result has not been tampered with, for example by adding or removing material into or from a measuring apparatus. This type of situation may develop for example in a timber handling process, in which a carrier picks up the timber for example from the woods of a party responsible for selling the timber, and transports the goods to some timber processing facility responsible for buying the timber and measuring the amount of timber, for example by weighing. In case the party responsible for selling the timber cannot be present in a measuring process, he/she cannot be absolutely certain whether, for example, a correct batch has been measured in the measuring process and whether the measuring process has been conducted in an honest fashion.

In addition, the invention enables the quality control for a measured material, as well as the review of a measuring process also in subsequent occasions, such as for example in a court of law or in other disputed situations. Still furthermore, the invention enables providing real-time information to parties involved in a measuring process, as well as an eventual approval by the parties, for example by means of some type of confirmation message or signal.

This patent application contains a.o. the following concepts:
- "Material to be measured" refers, for example, to a material, the amount, quality, or another such property of which must be measured because of a purchase, sale, transport, handling or other such action for assessing and effecting a compensation due, for example, on the basis of the amount or other such property of the material. The material to be measured can be any material, such as, for example, grain, timber, fruit or vegetables, soil, sand, glass, metal, refuse, fuel, water, paper, or other material subject to interest for some other reason and measurable for at least one of its properties. It is conceivable that a measurable property in this application is a visual image of a material, on the basis of which it is possible to determine, for example, at least roughly the amount or quality of the material.
- "Measuring process" refers, for example, to a procedure performed at a measuring site on a material to be measured, wherein the material to be measured is treated for image information and the material is measured for its amount, quality, or some other likewise interesting and measurable quantity, information, or other matter. In addition, the measuring process can be used for combining material-based image information and a measuring result for electronic measuring data.
- "Measuring data" refers to data or information, which is typically in electronic mode, stored in some storage facility, and communicable over an information network, comprising image information derived from a material to be measured in a measuring process, as well as a measuring result obtained from a material to be measured by means of some type of measuring instrument or sensor. The measuring data may also comprise a date and a time of day of conducting the measuring and imaging of a material, as well as information regarding a measurer and possibly also a material supplier or other parties involved with the material or its handling. The measuring data may further comprise information about a measuring site, and possibly also about measuring conditions, as well as other information regarding a measuring process or a material to be measured.
- "Measuring result" refers to information in electronic mode compiled by a measuring instrument on the basis of a signal received thereby from at least one measuring sensor, comprising a quantity or a value of given quantity measured from a material to be measured by means of some type of measuring sensor. The measuring result may refer, for example, to weight, length, or volume information for a material to be measured. The measuring result may also refer to information reflecting the quality of a material, or to a combination of the quantity to be measured and the quality-reflecting information. The measuring result may also comprise a date and a time of day of conducting the measuring of a material.
- "Party" refers to a party somehow involved with a material to be measured or with a measuring process and for one reason or another affected by measuring data. The party may be for example whoever is responsible for selling, buying, transporting, handling a material to be measured, or a performer of another like procedure to be effected on a material, who is entitled for example to a compensation effected on the basis of some property, such as the amount or quality, of a material to be measured. The party may also refer to a person who has conducted the measuring of a material.

In a method of the invention, a material to be measured is delivered to a measuring site, wherein the material to be measured is subjected to imaging for example with a digital camera for still pictures or video image. Performed on site is also measuring of the material, such as weighing, a length measurement, a volume measurement, or another like measurement, said measurement being used as a basis for effecting a compensation for a party involved in the process. According to the inventive method, the measuring process is also imaged. Thereafter, the image information derived from a material to be measured and a measuring process is combined with a measuring result for electronic measuring data and the obtained data is stored in some type of data processing device. The image information can also be compiled in such a way that the process of imaging a material and a measuring process is accompanied by imaging also the reading of a measuring instrument, whereby the image information comprises, not only an image of the material and the measuring process, but also a measuring result.

According to the invention, the electronic measuring data can be transferred to parties involved in measuring for example over an information network or, alternatively, the measuring data may also be outputted on some sort of printout material. The measuring data is preferably transmitted into the Internet on some server and the parties are supplied with information about the accessibility of the measuring data, the parties being able to take a look at the measuring data relevant to themselves for example at some www-address and to transmit for example an acknowledgement thereof either for the approval of the measuring data or to complain about it. As an alternative, the measuring data can be sent to relevant parties also by e-mail, and information about the accessibility of measuring data for example to a wireless mobile communicator.

The invention relates also to a system for implementing a method of the invention, said system comprising essential means for imaging a material to be measured and a measuring process, means for measuring the material and recording a measuring result, as well as means for combining the image information and the measuring result for electronic measuring data. Moreover, the system comprises means for storing electronic measuring data, as well as means for communicating the measuring data to parties involved in the measuring process.

Most preferably, the inventive system comprises a camera for imaging a material and a measuring process, as well as appropriate measuring instruments for measuring the material to be measured for a desired quantity, such as for example for measuring the weight of a weighing instrument, for measuring the volume of an instrument designed for the measurement of volume, and for measuring the length of an instrument designed for the measurement of length.

It is further possible that the inventive system comprises means for monitoring quality, such as for example instruments for measuring a material for its moisture, colour, temperature, acidity, conductivity, porosity, concentration, or some other relevant quantity reflecting the quality of a material.

Preferred embodiments of the invention will now be described in slightly more detail with reference to the accompanying drawings, in which
- fig. 1: shows a flowchart for a method of the invention about a reliable material measuring process,
- fig. 2: shows a system of the invention for a reliable material measuring process, and
- fig. 3: shows a second system of the invention for a reliable material measuring process.

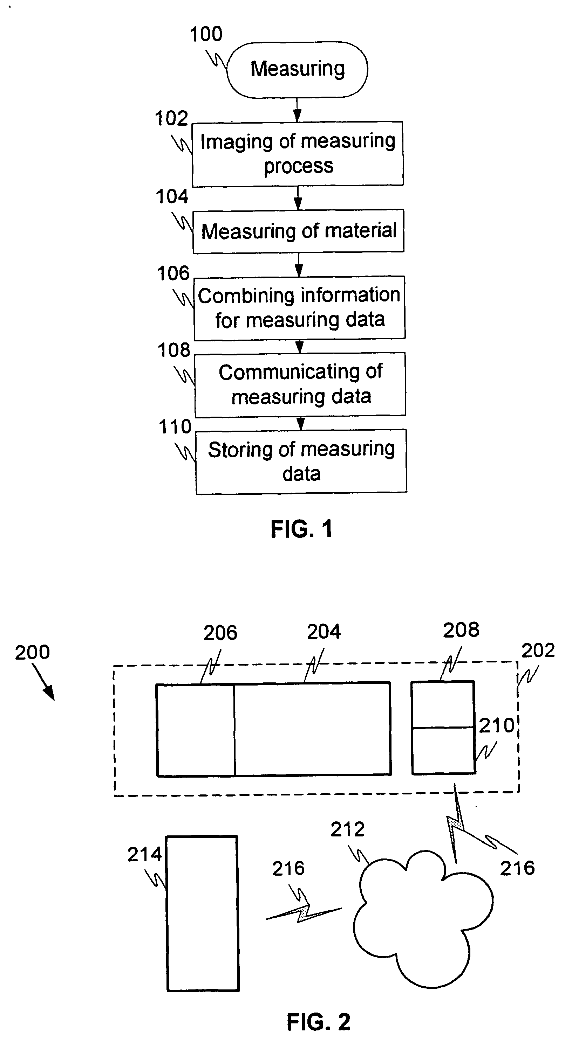

Fig. 1 shows a flowchart representing a method 100 of the invention for a reliable material measuring process. In the inventive method, a measuring site is supplied with a material to be measured, for which material a compensation is paid on the basis of the amount, quality or any other measurable or imagable feature of the material. The material may comprise for example timber, grain, fruit or vegetables, a liquid substance, or any other material which can be measured for a desired quantity or information. The material can be picked up from the warehouse of a party involved in the process or from any other similar location and delivered to a measuring site by some means of transportation, such as a trailer truck, train, ship or, in some cases, also by air.

An essential feature in terms of the invention is the imaging of a material and a measuring process by means of some imaging instrument, such as a camera, in step 102. The material can be imaged, for example, while it is still held in its carrying vehicle for making sure that the question is about a correct batch or material. Thus, a picture is also obtained depicting the means of transport that has carried the material. Thereafter, the material can be loaded on a measuring apparatus and measured in step 104 for a measuring result. The measuring step and the formation of a measuring result can also be imaged by means of a camera. In a measuring process, the material can be measured for any quantity necessary and measurable with regard to compensation, such as, for example, weight, volume, or length.

In the material measuring step 104, it is also possible to use various measuring instruments for measuring a material for quantities or aspects essential in terms of quality control, such as, for example, moisture, colour, temperature, acidity, conductivity, porosity, concentration, or some other quantity or information reflecting the quality of a particular material. According to the invention, the measurement of a quality-reflecting quantity can also be imaged with a camera, followed by combining or integrating said quantity with a measuring result. In certain cases, a mere photograph of a material may serve as a valid document essential in terms of quality control and sometimes also in terms of quantitative assessment.

The image taken by means of some imaging instrument of a material and a measuring process is combined according to the invention with the measuring result in step 106 for electronic measuring data. At its simplest, the measured quantity can be displayed by a quantity-measuring instrument in such a way that, as the measuring process is being imaged, the measuring instrument and its reading will also be imaged, the measuring result being linked immediately in the imaging process with the image taken of a material and a measuring process. Alternatively, the measuring result can also be combined with the image information by means of some type of data processing device or a similar apparatus. In addition, the image information and the measuring result can be supplemented for example with a time of day and a date or other such information for making sure that the image information and the measuring result match each other.

The measuring data compiled in step 108 is transferred to the accessibility of at least one of the parties involved in the process. The measuring data can be transmitted for example into an information network, such as, for example, into the Internet at some www-address, which the parties can visit and read the information, or alternatively the measuring data can be transmitted to the parties for example by means of e-mail, a diskette, a CD, a digital TV, or some other like communication medium.

The compiled electronic measuring data, comprising at least the image information about a material to be measured, and the measuring process as well as the measuring result, is stored in step 110 in some sort of storage facility, such as, for example, in the mass storage of a data processing device used for combining the image information and the measuring result, in the mass storage of a server present in some information network, or in another like storage facility.

Fig. 2 shows a system 200 of the invention for a reliable material measuring process. The system 200 comprises a measuring system 202, as well as measuring instruments 204 intended for measuring a material for a given quantity, quality or some other property, as well as imaging instruments 206 intended for imaging a material to be measured and a measuring process. The system comprises further means 208 intended for compiling measuring data, as well as typically also means 210 for connecting a measuring system present at the measuring site 202 with some information network 212 by means of some communication link 216, as well as means for transmitting the measuring data by way of the information network 212.

Typically, the inventive system comprises also a second data processing device 214 connectable with the information network 212 by way of the communication link 216, said device 214 providing a means for using the information network 212 in order to read or monitor the measuring data compiled by means of a measuring system present at the measuring site. The measuring data can be in storage for example in some part of the information network 212 or the measuring data can be transmitted from a measuring system present at the measuring site to the data processing device 214 via the information network 212. The measuring system present at the measuring site 202 and the second data processing device 214 are connectable to the information network 212 over the appropriate communication links 216.

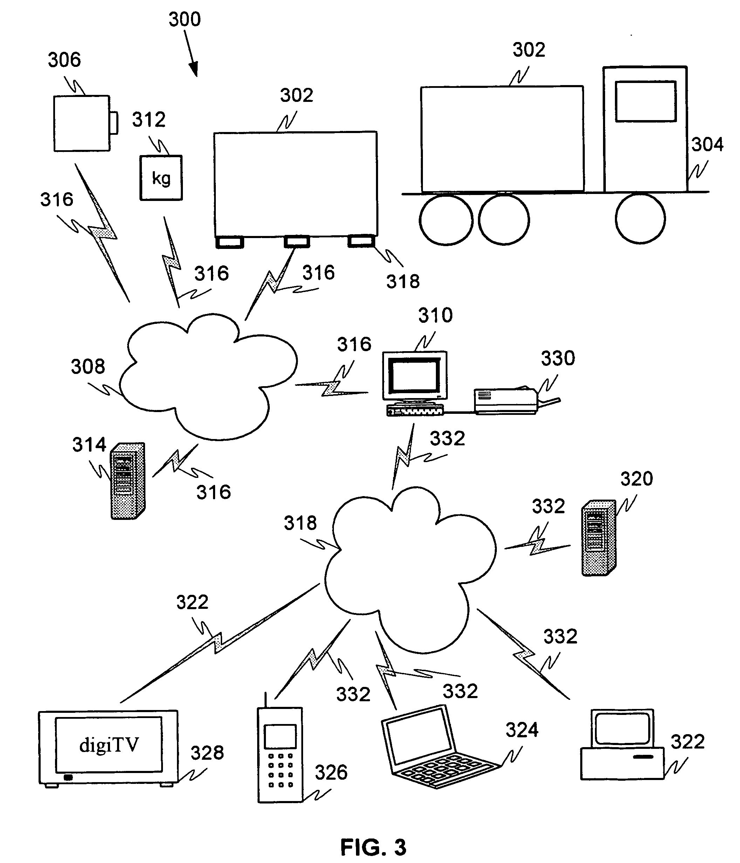

Fig. 3 depicts another system 300 of the invention for reliably measuring a material. In the inventive system, a material 302 to be measured is delivered to a measuring site by some sort of means of transportation 304 for imaging the material to be measured with an imaging instrument 306. The imaging instrument 306 can be, for example, a digital or analog camera or a video camera. The imaging instrument is typically connected over some information network 308 with a data processing device 310, such as a computer, present at the measuring site. The imaging instrument 306 can also be alternatively connected directly by way of a cable to the data processing device 310.

The imaging instrument 306 may include elements intended for signal processing, whereby received image information can be converted to another mode, as well as means for effecting linkage to the information network 308 and for transmitting image information. The signal processing elements intended for processing image information may also be included in some data processing device 310 connected to the information network 308. In addition, the imaging instrument 306 may also include a memory unit for storing image information and a processor, for example, for converting the image information to another mode, as well as an element intended for lighting an object to be imaged, such as, for example, a photoflash or a halogen lamp. The imaging instrument 306 may also be provided with an element disclosing a time and date, which is possibly designed in such a way that the image information incorporates in itself the imaging moment of a material to be measured and imaged on the basis of a date and time.

According to the invention, the material 302 to be measured is unloaded from the means of transportation 304 in the vicinity of measuring instruments 312 and the imaging instruments 306, such that the imaging instruments 306 can be used for imaging the material to be measured and the entire measuring process, as well as possibly also a quantity, a value of given quantity, or other information detected by the measuring instruments 312. Alternatively, in some cases, a material to be measured can be measured and imaged without unloading the material while the material remains on a means of transportation. The measuring is implemented by setting up measuring sensors 318, which are connectable to the measuring instrument 312, so as to be capable of measuring the material 302 to be measured for a desired quantity or property. The desired quantity can be for example the weight, volume, length, or any quantity or information of the material 302 which is sensible or measurable in terms of compensation or quality control, said quantity being determined by means of at least one quantity-measuring sensor 318 connected with the measuring instrument 312.

The measuring sensors 318 used in a measuring process can be any type of measuring sensors connectable by means of the wired or wireless communication link 316 or by way of the information network 308 to the measuring instrument 312 and capable of determining, for example, a material to be measured for its weight, length, volume, moisture, colour, temperature, acidity, conductivity, porosity, concentration, or some other quantity reflecting a property of this particular material. Particularly, the measuring sensor 318 comprises some type of weight sensing element. The measuring sensors 318 can be coupled also with a data processing device 310, said data processing device 310 preferably comprising elements for processing a measuring signal received from the measuring sensors 318.

The measuring instrument 312 can be any data processing device connectable with at least one measuring sensor 318 by means of the wired or wireless communication link 316 or via the information network 308. The measuring instrument 312 comprises preferably means for receiving a signal transmitted by the measuring sensor 318, means for compiling a measuring result on the basis of a signal received from the measuring sensor, a display unit for disclosing a quantity or information to be measured, means for establishing a connection with the information network 308, as well as means for transmitting the measuring result to the data processing device 310 via the information network 308. In addition, the measuring instrument 312 may comprise a memory unit, a processor, as well as means for processing a signal received from the sensors, such as, for example, for performing a function like a mathematical correction or calibration on the signal. The measuring instrument 312 may also be provided with an element disclosing a time and date, which is possibly designed in such a way that the measuring result incorporates in itself the measuring moment of a material to be measured on the basis of a date and time. In addition, the measuring instrument 312 can be incorporated within the data processing device 310.

In a system of the invention, a measuring result is preferably conveyed from the measuring instrument 312 to the data processing device 310 by means of some data communication method and system, as described for example in this specification. A video or image information acquired from a material to be measured is also transferred from the imaging instruments 306 to the data processing device 310. The data processing device 310 can be any type of apparatus intended for data processing, which is provided with necessary equipment for establishing a connection with the information network 308 by way of some sort of communication link 316, as well as with means for receiving image information and a measuring result. Preferably, the data processing device 310 is a computer.

The data processing device 310 is typically provided with means for compiling measuring data by means of image information and a measuring result, as well as with means for establishing a connection with an information network 318, such as, for example, the Internet, by way of some sort of data communication link 332, and with means for transmitting the measuring data to the information network 318. The data processing device 310 is typically also provided with at least one processor for analyzing and processing information, with at least one memory unit which may include both some RAM or central memory (Random Access Memory) and some ROM or permanent storage (Read Only Memory), and, in addition, even some buffer storage of sorts. Furthermore, the data processing device 310 may include, for example, some sort of statistical data processing element.

The data processing device 310 is typically also provided with an element disclosing a time and date, which is possibly designed in such a way that the measuring data compiled by the data processing device 310 incorporates in itself the compiling moment of measuring data on the basis of a date and time. The data processing device 310 is able to supplement the measuring data also with a material measuring moment received from the measuring instruments 312 and with a material imaging moment received from the imaging instruments 306, as well as, furthermore, with information about a measurer who has conducted the measurement. The information regarding a measurer who has conducted the measurement may comprise, for example, a number, a code, or a name unambiguously associable with the measurer. In addition, the data processing device 310 can be used for supplying the measuring data also with other information regarding measurement or measuring conditions.

The image information received from the imaging instruments 306 and the measuring result received from the measuring instruments 312 are combined for electronic measuring data by means of the data processing device 310, whereafter the measuring data can be stored and communicated by way of an information network 318, for example the Internet, to the accessibility of other parties involved in the process. In addition, the measuring data can be stored for example in a server 314 connectable with the internal information network 308 of a measuring site, or in a similar memory unit, or said data can also be stored in a memory unit included in the data processing device 310 responsible for compiling the data. Alternatively, the measuring data can also be stored in a server 320 connectable with the information network 318, or in a similar memory unit. It is also possible that the measuring data be transmitted directly over the information network 318 to other parties involved in the process.

Preferably, the measuring data is transmitted to appropriate parties in the form of a message, for example to a mobile communicator 326, whereby the party who has received the message may proceed to read and check the measuring data present at a site indicated by the message by means of some data processing device connectable with the information network 318, such as, for example, a mobile communicator 326, a computer 322, a portable computer 324, or a digital TV 328. A message about the accessibility of measuring data can be transmitted for example as an SMS message (Short Message Service), e-mail, an audio message or a fax to any data processing device in the possession of a party involved in the process. The message can also be supplemented with a possible user identifier and/or a password, whereby the message receiver can proceed to read or check the measuring data in case said measuring data is concealed with a password and/or a user identifier. As an alternative, in addition to notification about the accessibility of measuring data, a message may also contain a measuring result, whereby, in some cases, the party who has received the message is able to assess the measuring reliability just on the basis of a measuring result disclosed in the message. Thus, according to his/her own judgement, the party that has received the message may send an acknowledgement directly on the basis of just this message.

After reading or checking the measuring data, the party who has received the message can transmit an acknowledgement with his/her terminal 322, 324, 326, 328 to some terminal in the possession of a party responsible for material measuring, such as, for example, to the data processing device 310. In the acknowledgement, the party in question may approve a measuring result or report his/her discontent with it. The data processing device 310 present at a material measuring site may link acknowledgements received from the parties with relevant measuring data, whereby the measuring data provided with acknowledgements can be used in disputes when working out the rights of various parties.

Alternatively, a measuring result can also be outputted on some output material by means of a printer 330 present at a measuring site and connected to the data processing device 310, whereby the measuring result can be delivered to a party involved in the process for example by mail. This is a feasible approach, for example if the party is question is not in possession of any data processing device 322, 324, 326, 328 or does not have a chance to hook up with the information network 318. Said output can be for example a printout, a video cassette, a diskette, a CD-ROM, or some other similar element fit for storing, transmitting and/or outputting such measuring data.

The imaging instruments 306, measuring instruments 312, server 314, and data processing device 310 included in a system of the invention can be connectable with the communication network 308 by means of some sort of wired or wireless communication link 316. The communication link 316 may comprise a system which applies technology exploiting for example xDSL (Digital Subscriber Line), UMTS (Universal Mobile Telephone Service), GPRS (General Packet Radio Service), Bluetooth technique or some other electromagnetic radiation. The communication link 316 can be implemented also optically, such as, for example, by means of an IR transceiver system (Infra Red).

The systems and terminals 310, 320, 322, 324, 326, 328 comprise preferably appropriate elements for establishing a connection with the information network 318 by way of some sort of communication link 332, such as, for example, a link exploiting xDSL (Digital Subscriber Line), UMTS (Universal Mobile Telephone Service), GSM (Global System for Mobile Communications), GPRS (General Packet Radio Service), digiTV, Bluetooth technology or some other electromagnetic radiation.

The above describes but a few embodiments for a solution of the invention. The inventive principle can naturally be varied within the scope of protection defined by the claims, for example in terms of detailed implementations and applications. In particular, the method is applicable to measuring the most diversified of materials and quantities, in which measurement, a measuring result must be capable of being somehow associated with a material relating to the measuring result and with a corresponding measuring process. The inventive method and system can be utilized not only in industry and trade, but equally well also in various research projects, in the performance of various nursing or medical and surgical duties, as well as in laboratory measurements or tests.

It should further be appreciated that the essential inventive concept is not limited to the utilization of just those communication links or information networks mentioned in the specification, but that the concept or idea can be applied and practiced in any data communication solution whatsoever, without departing from the wording of the appended claims.

## Claims

1. A method (100) for performing a weighing measurement on a material, where the method comprises the steps of
- imaging (102) the material to be weighed,
- weighing (104) the material in order to obtain a weighing result, and
- combining (106) the image information, regarding the material as well as said weighing result, so as to produce a first electronic measuring data,
**characterized in that** the method further comprises the steps of:
- imaging (102) also the weighing process itself,
- combining (106) the image information, regarding the weighing process itself with the combined image information regarding the material as well as said weighing result, so as to produce a second, combined measuring data,
- communicating (108) by way of an information network said combined electronic measuring data from one party involved in the weighing process to the accessibility of at least one other remote party involved in the process,
- informing said other party of the accessibility of said measuring data by means of a mobile communication device and receiving, at the end of said one party, a communication from said other party as to the approval or deny of the combined measuring data.

2. A method as set forth in claim 1, **characterized in that** at least one party involved in the process is supplied with a weighing result by means of an SMS message.

3. A method as set forth in claim 1, **characterized in that** at least one party involved in the process approves or denies said combined measuring data by means of an SMS message.

4. A method as set forth in claim 1, **characterized in that** a material to be weighed and the weighing process, as well as the weighing result, are photographed for the production of electronic measuring data.

5. A method as set forth in claim 1, **characterized in that** said electronic measuring data comprises information about the time of weighing as well as about a measurer responsible for the weighing.

6. A method as set forth in claim 4, **characterized in that** the material to be weighed and the weighing process are photographed (102) as at least one still picture convertible to a digital mode.

7. A method as set forth in claim 1, **characterized in that** the material to be weighed and the weighing process are photographed (102) as a video image convertible to a digital mode.

8. A method as set forth in claim 1, **characterized in that** the weighing measurement and imaging effected on a material to be weighed are used as a basis for monitoring quality of the material.

9. A method as set forth in claim 1, **characterized in that** said weighing measurement further comprises at least one of the following: a length measurement, and a volume measurement, all related to timber.

10. A system (300) for weighing a material (302), where the system comprises
- imaging means (306) for imaging the material to be weighed,
- weighing means (312) for weighing the material (302) in order to obtain a weighing result, and
- combining means for combining the image information about the material to be weighed, as well as the weighing result, for the production of a first electronic measuring data,
**characterized in that** the system further comprises:
- imaging means (306) for imaging also the weighing process itself,
- combining means for combining the image information about the weighing result with the combined image information regarding the material, as well as said weighing result, for the production of a second, combined measuring data,
- communicating means (310, 322) for communicating said combined electronic measuring data by way of an information network (318) from one party involved in the weighing process to the accessibility of at least one other party involved in the process,
- means for informing said other party of the accessibility of said measuring data by means of a mobile communication device, and for the receipt of an approval or deny from said other party.

11. A system as set forth in claim 10, **characterized in that** the system comprises delivering means for delivering a weighing result to at least one party involved in the process by means of an SMS message.

12. A system as set forth in claim 10, **characterized in that** the system comprises means for approving or denying said combined measuring data by at least one party involved in the process by means of an SMS message.

13. A system as set forth in claim 10, **characterized in that** the system comprises photographing means for photographing the material to be weighed and the weighing process itself, as well as a weighing result, for the production of electronic measuring data.

14. A system as set forth in claim 10, **characterized in that** the system comprises combining means (310) for combining the time of weighing, as well as information about a measurer responsible for conducting the weighing, with said electronic measuring data.

15. A system as set forth in claim 10, **characterized in that** the system further comprises means (312, 318) for measuring timber material (302) for at least one of the following properties: length, volume, and quality-reflecting information.

## Patentansprüche

1. Verfahren (100) zum Ausführen einer Gewichtsmessung betreffend ein Material, welches Verfahren die Schritte
- einer Bilderstellung (102) des zu wiegenden Materials,
- eines Wiegens (104) des Materials, um ein Wiegeergebnis zu erhalten, und
- ein Kombinieren (106) der Bildinformation hinsichtlich des Materials wie auch des Wiegeergebnisses umfasst, um so einen ersten elektronischen Messdatensatz zu erstellen,
**dadurch gekennzeichnet, dass** das Verfahren überdies die Schritte aufweist:
- Bilderstellung (102) auch des Wiegeverfahrens selbst,
- Kombinieren (106) der Bildinformation hinsichtlich des Wiegeverfahrens selbst mit der kombinierten Bildinformation hinsichtlich des Materials wie auch des Wiegeergebnisses, um so einen zweiten, kombinierten Messdatensatz zu erstellen,
- Übermitteln (108) des kombinierten elektronischen Messdatensatzes mittels eines Informations-Netzwerkes von einer in dem Wiegeverfahren einbezogenen Partei an die Zugangsplattform mindestens einer anderen, in dem Verfahren involvierten abseits liegenden Partei, und
- Informieren der anderen Partei über die Zugänglichkeit des Messdatensatzes mittels einer mobilen Kommunikations-Einrichtung und Aufnahme einer Kommunikation am Ende der einen Partei von der anderen Partei bezüglich einer Annahmebestätigung oder -ablehnung des kombinierten Messdaten-Satzes.

2. Verfahren nach Anspruch 1,
**dadurch gekennzeichnet, dass** mindestens einer in dem Verfahren einbezogenen Partei ein Wiegeergebnis mittels einer SMS-Mitteilung übermittelt wird.

3. Verfahren nach Anspruch 1,
**dadurch gekennzeichnet, dass** mindestens eine in dem Verfahren einbezogene Partei den kombinierten Messdatensatz mittels einer SMS-Mitteilung annimmt oder ablehnt.

4. Verfahren nach Anspruch 1,
**dadurch gekennzeichnet, dass** ein zu wiegendes Material und der Wiegeprozess, wie auch das Wiegeergebnis zur Erzeugung eines elektronischen Messdatensatzes fotografiert wird.

5. Verfahren nach Anspruch 1,
**dadurch gekennzeichnet, dass** der elektronische Messdatensatz Information über die Wiegezeit, wie auch über die für den Wiegevorgang verantwortliche Messvorrichtung um fasst.

6. Verfahren nach Anspruch 4,
**dadurch gekennzeichnet, dass** das zu wiegende Material und das Wiegeverfahren mit zumindest noch einem in einen Digitalmodus konvertierbaren Bild fotografiert (102) werden.

7. Verfahren nach Anspruch 1,
**dadurch gekennzeichnet, dass** das zu wiegende Material und der Wiegeprozess als ein in einen Digitalmodus konvertierbares Videobild fotografiert (102) werden.

8. Verfahren nach Anspruch 1,
**dadurch gekennzeichnet, dass** die Wiegemessung und die für das zu wiegende Material durchgeführte Bilderstellung als Grundlage zur Qualitätsüberwachung des Materials verwendet werden.

9. Verfahren nach Anspruch 1,
**dadurch gekennzeichnet, dass** das Wiegemessverfahren überdies zumindest eine der folgenden Schritte aufweist: eine Längenmessung und eine Volumenmessung, alle bezogen auf Nutzholz.

10. System (300) zum Wiegen von Material (302), welches System
- eine Bilderstellungs-Vorrichtung (306) zur Bilderstellung des zu wiegenden Materials,
- eine Wiegevorrichtung (312) zum Wiegen des Materials (302), um ein Wiegeergebnis zu erhalten, und
- eine Kombiniervorrichtung zum Kombinieren der Bildinformation betreffend das zu wiegende Material, wie auch das Wiegeergebnis zur Erstellung eines ersten elektronischen Messdatensatzes aufweist,
**dadurch gekennzeichnet,**
**dass** das System überdies umfasst:
- eine Bilderstellungsvorrichtung (306) zur Bilderstellung auch des Wiegeverfahrens selbst,
- eine Kombiniervorrichtung zum Kombinieren der Bildinformation betreffend das Wiegeergebnis mit der kombinierten Bildinformation bezüglich des Materials wie auch des Wiegeergebnisses zur Erstellung eines zweiten kombinierten Messdatensatzes
- eine Kommunikationsvorrichtung (310, 322) zur Übermittlung des kombinierten elektronischen Messdatensatzes mit Hilfe eines Informations-Netzwerks (318) von einer in dem Wiegeverfahren einbezogenen Partei zur Zugangsplattform von mindestens einer anderen in dem Verfahren einbezogenen Partei, und
- eine Vorrichtung zum Informieren der anderen Partei betreffs der Zugänglichkeit des Messdatensatzes mittels einer mobilen Kommunikationseinrichtung und zum Erhalt einer Annahmebestätigung oder -ablehnung von der anderen Partei.

11. System nach Anspruch 10,
**dadurch gekennzeichnet, dass** das System eine Übermittlungseinrichtung zum Übermitteln eines Wiegeergebnisses an mindestens eine in dem Verfahren beteiligte Partei mittels einer SMS-Mitteilung umfasst.

12. System nach Anspruch 10,
**dadurch gekennzeichnet, dass** das System eine Vorrichtung zur Annahme oder Ablehnung des kombinierten Messdatensatzes von zumindest einer in dem Verfahren einbezogenen Partei mittels einer SMS-Mitteilung aufweist.

13. System nach Anspruch 10,
**dadurch gekennzeichnet, dass** das System eine Fotografier-Einrichtung zum Fotografieren des zu wiegenden Materials und des Wiegeverfahrens selbst, wie auch ein Wiegeergebnis zur Erstellung eines elektronischen Messdatensatzes aufweist.

14. System nach Anspruch 10,
**dadurch gekennzeichnet, dass** das System eine Kombiniervorrichtung (310) zum Kombinieren der Wiegezeit, wie auch der Information über die zur Durchführung des Wiegevorgangs verantwortliche Wiegevorrichtung mit dem elektronischen Meßdatensatz aufweist.

15. System nach Anspruch 10,
**dadurch gekennzeichnet, dass** das System ferner eine Einrichtung (312, 318) zum Messen von Nutzholz-Material (302) hinsichtlich zumindest einer der folgenden Eigenschaften aufweist: Länge, Volumen und qualitätsreflektierende Information.

## Revendications

1. Procédé (100) pour réaliser une mesure de poids sur un matériau, le procédé comprenant les étapes consistant à :
imager (102) le matériau à peser,
peser (104) le matériau afin d'obtenir un résultat de pesée, et
combiner (106) les informations d'image, concernant le matériau ainsi que ledit résultat de pesée, afin de produire des premières données de mesure électriques,
**caractérisé en ce que** le procédé comprend en outre les étapes consistant à :
imager (102) également le processus de pesée lui-même,
combiner (106) les informations d'image, concernant le processus de pesée lui-même avec les informations d'image combinées concernant le matériau ainsi que ledit résultat de pesée, afin de produire des secondes données de mesure combinées,
communiquer (108) au moyen d'un réseau d'information lesdites données de mesure électroniques combinées d'une partie impliquée dans le processus de pesée à l'accessibilité d'au moins une autre partie distante impliquée dans le processus,
informer ladite autre partie de l'accessibilité desdites données de mesure au moyen d'un dispositif de communication mobile et recevoir, à l'extrémité de ladite partie, une communication de ladite autre partie quant à l'approbation ou au rejet des données de mesure combinées.

2. Procédé selon la revendication 1, **caractérisé en ce qu'**au moins une partie impliquée dans le processus reçoit un résultat de pesée au moyen d'un message SMS.

3. Procédé selon la revendication 1, **caractérisé en ce qu'**au moins une partie impliquée dans le processus approuve ou rejette lesdites données de mesure combinées au moyen d'un message SMS.

4. Procédé selon la revendication 1, **caractérisé en ce qu'**un matériau à peser et le processus de pesée, ainsi que le résultat de pesée, sont photographiés pour la production de données de mesure électroniques.

5. Procédé selon la revendication 1, **caractérisé en ce que** lesdites données de mesure électroniques comprennent des informations sur l'heure de pesée ainsi que sur un mesureur responsable de la pesée.

6. Procédé selon la revendication 4, **caractérisé en ce que** le matériau à peser et le processus de pesée sont photographiés (102) comme au moins une photographie convertible en mode numérique.

7. Procédé selon la revendication 1, **caractérisé en ce que** le matériau à peser et le processus de pesée sont photographiés (102) comme une image vidéo convertible en mode numérique.

8. Procédé selon la revendication 1, **caractérisé en ce que** la mesure de pesée et l'imagerie réalisées sur un matériau à peser sont utilisées comme base pour contrôler la qualité du matériau.

9. Procédé selon la revendication 1, **caractérisé en ce que** ladite mesure de pesée comprend en outre l'un des éléments suivants : une mesure de longueur, et une mesure de volume, toutes associées au bois en grume.

10. Système (300) pour peser un matériau (302), le système comprenant :
des moyens d'imagerie (306) pour imager le matériau à peser,
des moyens de pesée (312) pour peser le matériau (302) afin d'obtenir un résultat de pesée, et
des moyens de combinaison pour combiner les informations d'image concernant le matériau à peser, ainsi que le résultat de pesée, afin de produire des premières données de mesure électriques,
**caractérisé en ce que** le système comprend en outre :
des moyens d'imagerie (306) pour imager également le processus de pesée lui-même,
des moyens de combinaison pour combiner les informations d'image concernant le processus de pesée avec les informations d'image combinées concernent le matériau ainsi que ledit résultat de pesée, afin de produire des secondes données de mesure combinées,
des moyens de communication (310, 322) pour communiquer lesdites données de mesure électroniques combinées au moyen d'un réseau d'information (318) d'une partie impliquée dans le processus de pesée à l'accessibilité d'au moins une autre partie distante impliquée dans le processus,
des moyens pour informer ladite autre partie de l'accessibilité desdites données de mesure au moyen d'un dispositif de communication mobile, et pour recevoir une approbation ou un rejet de ladite autre partie.

11. Système selon la revendication 10, **caractérisé en ce que** le système comprend des moyens de livraison pour livrer un résultat de pesée à au moins une partie impliquée dans le processus au moyen d'un message SMS.

12. Système selon la revendication 10, **caractérisé en ce que** le système comprend des moyens pour approuver ou rejeter lesdites données de mesure combinées par au moins une partie impliquée dans le processus au moyen d'un message SMS.

13. Système selon la revendication 10, **caractérisé en ce que** le système comprend des moyens de photographie pour photographier le matériau à peser et le processus de pesée lui-même, ainsi qu'un résultat de pesée, pour la production de données de mesure électroniques.

14. Système selon la revendication 10, **caractérisé en ce que** le système comprend des moyens de combinaison (310) pour combiner l'heure de pesée, ainsi que des informations sur un mesureur responsable de réaliser la pesée, avec lesdites données de mesure électroniques.

15. Système selon la revendication 10, **caractérisé en ce que** le système comprend en outre des moyens (312, 318) pour mesurer un bois en grume (302) pour au moins l'une des propriétés suivantes : longueur, volume et informations sur la qualité.
